# EUROPEAN PATENT SPECIFICATION

(11) **EP 2 437 151 B1**
(45) Date of publication and mention of the grant of the patent: **08.07.2020**
(21) Application number: 11180097.5
(22) Date of filing: 05.09.2011
(51) Int. Cl.: G06F 3/048, G06F 1/16

(54) **Apparatus and method for turning e-book pages in portable terminal**
Vorrichtung und Verfahren zum Blättern von e-Book-Seiten in einem tragbaren Endgerät
Appareil et procédé pour tourner des pages de livre électronique (e-book) dans un terminal portable

(30) Priority: 01.10.2010 KR 20100095815; 28.12.2010 KR 20100136624
(43) Date of publication of application: 04.04.2012
(73) Proprietor: Samsung Electronics Co., Ltd., Suwon-si, Gyeonggi-do, 443-742 (KR)
(72) Inventor: Lee, Sung-Min, Seoul (KR); Lee, Chul-Hwan, Seoul (KR); Lee, Dal-Kwang, Gyeonggi-do (KR)
(74) Representative: HGF

(56) References cited:
- EP-A2- 2 104 026
- WO-A1-2009/097592
- US-A- 5 463 725
- US-A1- 2006 026 521
- US-A1- 2007 085 845
- US-A1- 2008 074 399

## Description

### BACKGROUND OF THE INVENTION

### 1. Field of the Invention

The present invention relates to a portable terminal. More particularly, the present invention relates to an apparatus and method for turning electronic book (e-book) pages in a portable terminal having an e-book function.

### 2. Description of the Related Art

Portable terminals are in trend of sudden spread owing to the convenience of carrying. Accordingly, service providers (i.e., system manufacturers) are competitively developing terminals having more special functions to guarantee many users. For example, the portable terminals are providing various functions of phone books, games, schedulers, short messages, the Internet, electronic mail (e-mail) messages, morning wakeup calls, MPEG-1 Audio Layer 3 (MP3) players, digital cameras, electronic dictionaries, e-books and the like.

Recently, an e-book, one of information provision media replacing a conventional paper book, is being introduced to show text contents in an electronic display manner. The e-book is of a scheme of, after storing text contents in a flash memory or a built-in hard disk, showing the stored text contents through a display screen. The e-book has an advantage of being capable of, after storing a large amount of book stories at a time, selecting and showing a wanted story.

At this time, the display screen can display only contents of a restricted region. Accordingly, to continuously seamlessly show the next story of the contents, a User Interface (UI) providing a page move or scroll function should be provided. Generally, the e-book can show a story of text contents on a screen while moving through a page up / page down function using a key input means provided in the e-book. Through this method, a user can read the full story of the text contents stored in the e-book.

However, a UI of a scheme of turning pages through key manipulation as above is merely of a direction control scheme of the most basic form and is not designed from an ergonomic viewpoint of making it convenient for a user to use. So, there is a problem that it is inconvenient for the user to convert pages of contents naturally.

US 5,463,725 A discloses an interface for making information available to a user which provides a display similar to a printed book or magazine, in which, in order to "turn the page" of the display book, the user touches the screen with their hand or a pointing device, and moves it across the screen.

US 2006/0026521 A1 discloses methods and systems for processing touch inputs.

U 2008/0074399 A1 discloses a menu selection method.

### SUMMARY OF THE INVENTION

It is an aim of certain embodiments of the invention to solve, mitigate, or obviate, at least partly, at least one of the problems and/or disadvantages associated with the prior art. Certain embodiments aim to provide at least one of the advantages described below.

Certain embodiments of the present invention aim to substantially solve at least the above problems and/or disadvantages and to provide at least the advantages below. Accordingly, certain embodiments of the present invention provide an apparatus and method for turning electronic book (e-book) pages in a portable terminal having an e-book function.

Certain embodiments of the present invention provide an apparatus and method for turning e-book pages in an analog manner, for enabling a user to convert pages of contents naturally with a feeling as if he/she really turns a book in a portable terminal having an e-book function.

According to a first aspect of the present invention, a method for turning electronic book (e-book) pages in a portable terminal having an e-book function is provided. The method comprising: displaying a page of an e-book on a screen of the portable terminal; detecting a touch in a right user interface, UI, activation region of the e-book or a left UI activation region of the e-book; displaying the right UI activation region or the left UI activation region on the at least one side of the e-book; displaying a number of page to be turned at a position adjacent to a drag on the right UI activation region or the left UI activation region, wherein the number of the page to be turned increases corresponding to the amount of the drag of the detected touch; moving to a page of the e-book corresponding to the number of the page according to releasing the drag; and displaying the moved page.

In a first disclosure a method for turning e-book pages in a portable terminal having an e-book function is provided. The method includes executing an e-book in the portable terminal, determining if a touch down is input more left than a predetermined right User Interface (UI) activation region of the e-book and then, in a state where the touch down is input, a drag and touch up is input in the right direction, and, when the touch down is input more left than the predetermined right UI activation region of the e-book and then, in the state where the touch down is input, the drag and touch up is input in the right direction, displaying the just preceding page on a screen.

In the context of this specification, a touch down may also be described as the touching, pressing, or making contact with a touch sensitive input means, such as a touch sensitive screen on which pages of the e-book are displayed, for example with a finger, stylus, or other suitable implement or tool. A touch down therefore corresponds to an event consisting of bringing a finger, stylus, implement or tool down into contact with the touch sensitive input means.

Similarly, a touch up may also be described as ceasing or terminating a touching of the touch sensitive input means. It represents the termination of a contact with the touch sensitive input means. In other words, a touch up is a disengagement from, or a release of the touch sensitive input means. A touch up therefore corresponds to an event consisting of bringing a finger, stylus, implement or tool away from the touch sensitive input means, breaking contact. A touch up can also be described as a lifting off, from the touch sensitive input means, of the finger, stylus, implement or tool.

In the context of this specification, a drag may also be described as the movement of a finger, stylus, implement or tool across a touch sensitive input means whilst maintaining contact with that input means. Typically, a drag will be preceded by, or begin with a touch down (contact is first made), and be followed by, or terminated by a touch up (contact is broken/released). Additionally, one drag event may immediately follow another, such that the end position of one drag is the start position of the next.

A drag in the right direction (a drag right) may be described as a drag which begins at a first position (start position) on the touch sensitive input means (e.g. the position at which a touch down occurs) and ends at a second position (end position) (e.g. the position at which a touch up occurs), where the second position is to the right of the first position (i.e. the second position is further right than the first position, but not necessarily directly to the right; the second position may additionally be above, level with, or below the first position). Similarly, a drag in the left direction (a drag left) may be described as one in which the end position is to the left (but not necessarily directly to the left) of the start position, a drag down may be described as one in which the end position is below (but not necessarily directly below - it could additionally be to the left or to the right of) the start position, and a drag up may be described as one in which the end position is above (but not necessarily directly above) the start position.

It will be appreciated that the step or feature of determining if a touch down is input more left than a predetermined right User Interface (UI) activation region of the e-book in certain embodiments comprises determining whether a position at which a touch sensitive screen (displaying one or more pages of the e-book) is initially touched (in the context of a touch, optional drag, and release sequence of events) is to the left of a predetermined area of the touch sensitive screen. The input of a touch down thus corresponds to performing a touch down, i.e. touching the touch sensitive input means.

In certain embodiments, the step or feature of then determining if, in a state where the touch down is input, a drag and touch up is input in the right direction, comprises determining whether, following a touch down and without releasing or breaking contact with the touch sensitive screen, a drag right is performed, followed by or terminated by a touch up (a release). As will be appreciated, the movement constituting the drag right may come to a halt before the touch up (i.e. the contacting finger, stylus etc. may be stationary with respect to the input means just before the touch up is performed), or alternatively, the touch up may be performed while the finger, stylus etc. is in motion across the touch sensitive input means. Thus, the touch up may comprise a lift at the end of a sweep across a touch sensitive screen. Inputting a drag and touch up thus corresponds to performing a drag and release.

In certain embodiments, displaying the just preceding page on a screen, comprises displaying on a screen (e.g. a touch sensitive screen) the page of an e-book immediately preceding the page that was displayed while the touch down (contact), drag, and touch up (release) operations were being performed.

In certain embodiments the method further comprises:
determining if a touch down is input more right than a predetermined left UI activation region of the e-book and then, in a state where the touch down is input, a drag and touch up is input in the left direction; and
when the touch down is input more right than the predetermined left UI activation region of the e-book and then, in the state where the touch down is input, the drag and touch up is input in the left direction, displaying the just next page on the screen.

It will be appreciated that the step or feature of determining if a touch down is input more right than a predetermined left User Interface (UI) activation region of the e-book in certain embodiments comprises determining whether a position at which contact is made (i.e. initiated) with a touch sensitive screen (displaying the e-book) is to the right of a predetermined area of the touch sensitive screen.

In certain embodiments, the step or feature of then determining if, in a state where the touch down is input, a drag and touch up is input in the left direction, comprises determining whether, following a touch down and without releasing or breaking contact with the touch sensitive screen, a drag left is performed, followed by or terminated by a touch up (a release).

In certain embodiments a right partial region (a right portion) of the screen (e.g. the touch sensitive screen displaying the e-book pages) is defined as a right UI activation region, and a left partial region (left portion) of the screen is defined as a left UI activation region.

In certain embodiments the method further comprises:
determining if a touch down is input in the predetermined right UI activation region of the e-book (e.g. a predetermined right portion of a touch sensitive screen displaying the e-book);
when the touch down is input in the predetermined right UI activation region of the e-book, displaying the right side of the e-book (e.g. displaying at least a right page, e.g. page number R, of the e-book open at the appropriate position, i.e. a current, or currently selected position);
determining if a drag and touch up is input in the left direction in a state where the touch down is input in the predetermined right UI activation region (i.e. is the drag performed after the touch down is performed, without releasing/breaking contact); and
when the drag and touch up is input in the left direction in the state where the touch down is input in the predetermined right UI activation region, displaying the just next page on the screen (e.g. displaying the page immediately following the page that was displayed while the touch down, drag, and touch up were being performed, i.e. page number R+1). In other words, a virtual page turn of one page forwards is performed.

In certain embodiments, the method further comprises:
determining if a drag is input in the right direction in the state where the touch down is input in the predetermined right UI activation region (i.e. determining if, following a touch down in the right UI activation region, a drag right is performed without breaking contact with the touch sensitive input means);
when the drag is input in the right direction in the state where the touch down is input in the predetermined right UI activation region, displaying the number of pages increasing as much as the dragging on the right side of the e-book (e.g. displaying a representation of a plurality of pages following on from the currently displayed right page, the number N of said plurality of pages being determined by a length of the drag right, such as a difference between nominal X coordinates of the end and start positions of the drag right);
determining if a drag and touch up is input in the left direction in the state where the drag is input in the right direction (i.e. determining if a drag left is performed after the drag right, without breaking contact in between); and
when the drag and touch up is input in the left direction in the state where the drag is input in the right direction, displaying a next page corresponding to the number of the increased pages (e.g. displaying a page corresponding to the last of said plurality of pages, or displaying a page appropriate or corresponding to a vitual turn of N pages).

It will be appreciated that, in certain embodiments, displaying the number of pages comprises displaying just edge portions (right hand edges) of the N pages. If the right hand page displayed in response to the touch down is page number R, then the drag right determines the number N of following pages displayed (i.e. represented), and in certain embodiments the drag left then results in the page number R+N being displayed.

In certain embodiments, the method further comprises:
when a touch down is input in the predetermined left UI activation region of the e-book (e.g. in a predetermined left portion of a touch sensitive screen displaying the e-book), displaying the left side of the e-book (e.g. displaying at least a left page, number L, of the e-book open at the appropriate position, i.e. a current, or currently selected position);
determining if a drag and touch up is input in the right direction in the state where the touch down is input in the predetermined left UI activation region (i.e. determining if, following a touch down in the left UI activation region, a drag right is performed without breaking contact with the touch sensitive input means); and
when the drag and touch up is input in the right direction in the state where the touch down is input in the predetermined left UI activation region, displaying the just preceding page on the screen (e.g. the immediately preceding page, number L-1).

In certain embodiments the method further comprises:
determining if a drag is input in the left direction in the state where the touch down is input in the predetermined left UI activation region (i.e. is the drag left performed, after the touch down, without breaking contact);
when the drag is input in the left direction in the state where the touch down is input in the predetermined left UI activation region, displaying the number of pages decreasing as much as the dragging on the left side of the e-book (e.g. displaying a representation of a plurality of pages preceding the currently displayed page, number L, the number N of said plurality of pages being determined by a length of the drag left, such as a difference between nominal X coordinates of the end and start positions of the drag right);
determining if a drag and touch up is input in the right direction in a state where the drag is input in the left direction (i.e. determining if a drag right is performed after the drag left, without breaking contact in between); and
when the drag and touch up is input in the right direction in the state where the drag is input in the left direction, displaying a preceding page corresponding to the number of the decreased pages (e.g. displaying a page corresponding to the first (earliest, lowest numbered) of said plurality of pages, or displaying a page appropriate or corresponding to a vitual turn of N pages).

It will be appreciated that, in certain embodiments, displaying the number of pages comprises displaying just edge portions (left hand edges) of the N pages. If the left hand page displayed in response to the touch down is page number L, then the drag left determines the number N of preceding pages displayed (i.e. represented), and in certain embodiments the drag right then results in the page number L-N being displayed.

In certain embodiments the method further comprises:
determining if a bookmark On switch (e.g. a portion of a touch sensitive input means, such as a screen, designated as a bookmark On switch) is touched in a predetermined upper UI activation region of the e-book; and
when the bookmark On switch is touched in the predetermined upper UI activation region of the e-book, activating a bookmark function.

In certain embodiments, the method further comprises:
determining if a touch down is input in the predetermined upper UI activation region of the e-book and then, in a state where the touch down is input, a drag is input in the downward direction (i.e. is a drag down performed, following the touch down, without breaking contact);
when the touch down is input in the predetermined upper UI activation region of the e-book and then, in the state where the touch down is input, the drag is input in the downward direction, generating a clip (e.g. an image or representation of a clip) corresponding to a bookmark to be added;
determining if a touch up is input in the state where the drag is input in the downward direction (e.g. is the drag down followed by, or terminated by, a touch up); and
when the touch up is input in the state where the drag is input in the downward direction, positioning the generated clip in a position where the touch up is input.

In certain embodiments, the method further comprises:
determining if a touch down is input for a clip corresponding to a previously added bookmark in the e-book (e.g. determining if the postion of the touch down corresponds to the position of a previously generated clip);
when the touch down is input for the clip corresponding to the previously added bookmark in the e-book, displaying a corresponding bookmark page;
determining if a long touch (e.g. a continuous touch longer than a predetermined threshold period of time) is sensed for the clip whose bookmark page has been displayed; and
when the long touch is sensed for the clip whose bookmark page has been displayed, displaying information on the previously added bookmark.

In certain embodiments, the method further comprises:
determining if a touch down is input for a clip corresponding to a previously added bookmark in the e-book;
when the touch down is input for the clip corresponding to the previously added bookmark in the e-book, displaying a corresponding bookmark page;
determining if a drag and touch up is input in the left/right direction in a state where the touch down is input for the clip whose bookmark page has been displayed; and
when the drag and touch up is input in the left/right direction in the state where the touch down is input for the clip whose bookmark page has been displayed, moving to the bookmark page corresponding to the previously added bookmark.

Thus, in certain embodiments, depending on the direction of the drag, a virtual page turn is performed, either to the immediately preceding or immediately following bookmarked page.

In certain embodiments, the method further comprises:
determining if a touch down is input for a clip corresponding to a previously added bookmark in the e-book and then, in a state where the touch down is input, a drag and touch up is input in the upward direction; and
when the touch down is input for the clip corresponding to the previously added bookmark in the e-book and then, in the state where the touch down is input, the drag and touch up is input in the upward direction, deleting a clip corresponding to the previously added bookmark.

In a second disclosure a method for turning electronic book (e-book) pages is provided, the method comprising:
executing an e-book with a portable terminal having a touch sensitive screen for displaying pages of the e-book;
displaying a page of the e-book on said screen;
detecting a touch on the screen followed by a drag to the left or right, and a release;
displaying the next page of the e-book on the screen if the drag is to the left; and
displaying the preceding page of the e-book on the screen if the drag is to the right.
Embodiments of this second disclosure may additionally incorporate any of the features of the first disclosure or its embodiments.

In accordance with a second aspect of the present invention, an apparatus for turning electronic book (e-book) pages in a portable terminal having an e-book function is provided. The apparatus comprising: an e-book viewer for executing an e-book, controlling a display unit to display a page of the e-book; and a controller configured to: detect a touch in a right user interface, UI, activation region of the e-book or a left UI activation region of the e-book; display the right UI activation region or the left UI activation region on the at least one side of the e-book; display a number of page to be turned at a position adjacent to a drag on the right UI activation region or the left UI activation region, wherein the number of the page to be turned increases_corresponding to the amount of the drag of the detected touch; move to a page of the e-book corresponding to the number of the page according to releasing the drag; and display the moved page.

In a third disclosure an apparatus for turning e-book pages in a portable terminal having an e-book function is provided. The apparatus includes an e-book viewer and a display unit. The e-book viewer executes an e-book, determines if a touch down (e.g. on a touch sensitive input means, such as a touch sensitive screen displaying the e-book pages) is input more left than a predetermined right UI activation region of the e-book and then, in a state where the touch down is input, a drag and touch up is input in the right direction and, when the touch down is input more left than the predetermined right UI activation region of the e-book and then, in the state where the touch down is input, the drag and touch up is input in the right direction, controls a display unit to display the just preceding page on a screen. The display unit displays, on the screen, a corresponding page of the e-book according to the control of the e-book viewer.

As will be appreciated, in certain embodiments the e-book viewer comprises a processor adapted to execute an e-book application or program.

In a fourth disclosure a method for turning e-book pages in a portable terminal having an e-book function is provided. The method includes executing an e-book, displaying a shortcut item list in a predetermined upper UI activation region of the e-book, determining if a touch down is input for one shortcut item among the shortcut item list (e.g. determining if an area or region displaying said one shortcut item is touched) and then, in a state where the touch down is input, a drag and touch up is input in the left/right direction (i.e. is a drag, to the left or right, performed after the touch down, without breaking contact), and, when it is determined that the touch down is input for the one shortcut item among the shortcut item list and then, in the state where the touch down is input, the drag and touch up is input in the left/right direction, displaying, on a screen, a page corresponding to the one shortcut item.

In certain embodiments, the method further comprises:
determining if a touch down is input for one shortcut item among the shortcut item list and then, in a state where the touch down is input, a drag and touch up is input in the downward direction; and
when the touch down is input for the one shortcut item among the shortcut item list and then, in the state where the touch down is input, the drag and touch up is input in the downward direction, displaying, on the screen, a sub item list of the (i.e. corresponding to the) one shortcut item.

In certain embodiments, the method further comprises:
determining if a touch down is input for one sub item among the displayed sub item list and then, in a state where the touch down is input, a touch up is input; and
when the touch down is input for the one sub item among the displayed sub item list and then, in the state where the touch down is input, the touch up is input, displaying a page corresponding to the one sub item on the screen.

Thus, in certain embodiments, if a touch down on an area displaying a particular sub-item is performed, followed by a touch up (release), without an intervening drag, then a page corresponding to that sub item is displayed.

In certain embodiments, the method further comprises:
determining if a touch down is input for one sub item among the displayed sub item list and then, in a state where the touch down is input, a drag and touch up is input in the upward direction; and
when the touch down is input for the one sub item among the displayed sub item list and then, in the state where the touch down is input, the drag and touch up is input in the upward direction, removing the displaying of the sub item list of the one shortcut item on the screen.

In certain embodiments, the method further comprises:
determining if a touch down is input in the upper UI activation region and then, in a state where the touch down is input, a drag and touch up is input in the left/right direction; and
when the touch down is input in the upper UI activation region and then, in the state where the touch down is input, the drag and touch up is input in the left/right direction, displaying, on the screen, as much next/previous shortcut item list as the dragging in the upper UI activation region (e.g. if the drag is to the left, a next, following portion of the shortcut item list is displayed, the size of that portion being determined by a length of the drag to the left, and if the drag is to the right, a preceding portion of the shortcut item list is displayed, the size of that portion being determined by a length of the drag to the right).

In certain embodiments, the method further comprises:
determining if a multi touch down is input (e.g. is the touch sensitive input means, such as a screen, touched in a plurality of different positions simultaneously) in the upper UI activation region and then, in a state where the multi touch down is input, a drag and touch up is input;
when the multi touch down is input in the upper UI activation region and then, in the state where the multi touch down is input, the drag and touch up is input, determining if a distance value between points where the multi touch down is input increases (e.g. determining if the separation of the touched points increases);
when it is determined that the distance value between the points where the multi touch down is input increases, displaying a shortcut item list of an enlarged size corresponding to the increased distance value in the upper UI activation region of the screen; and
when it is determined that the distance value between the points where the multi touch down is input decreases (e.g. the touched points get closer together as the result of the drag - which may be a drag from one or both of the initially touched points, in the event that the number of touch downs is two), displaying a shortcut item list of a reduced size corresponding to the decreased distance value in the upper UI activation region of the screen.

In other words, in certain embodiments, the size of the displayed shortcut item list may be increased or decreased according to whether, following a touch down at two points simultaneously, the touched positions are dragged apart or together respectively.

In certain embodiments, the method further comprises:
determining if a long touch (i.e. a touch having a duration greater than a predetermined threshold value) is input for one shortcut item among the shortcut item list displayed in the upper UI activation region of the e-book;
when the long touch is input for the one shortcut item among the shortcut item list displayed in the upper UI activation region of the e-book, determining if it is a state where a sub item list of the one shortcut item is being displayed in the upper UI activation region of the e-book;
when it is determined that it is not the state where the sub item list of the one shortcut item is being displayed in the upper UI activation region of the e-book, displaying the sub item list of the one shortcut item in a size smaller than the shortcut item list between the one shortcut item and a next shortcut item in the upper UI activation region of the e-book; and
when it is the state where the sub item list of the one shortcut item is being displayed in the upper UI activation region of the e-book, removing the displaying of the sub item list of the one shortcut item in the upper UI activation region of the e-book.

In a fifth disclosure an apparatus for turning e-book pages in a portable terminal having an e-book function is provided. The apparatus includes an e-book viewer and a display unit. The e-book viewer executes an e-book, controls a display unit to display a shortcut item list in a predetermined upper UI activation region of the e-book and, when a touch down is input for one shortcut item among the shortcut item list and then, in a state where the touch down is input, a drag and touch up is input in the left/right direction, controls the display unit to display, on a screen, a page corresponding to the one shortcut item. The display unit displays the shortcut item list in the predetermined upper UI activation region according to the control of the e-book viewer, and displays, on the screen, a corresponding page of the e-book.

Again, in certain embodiments the e-book viewer comprises a processor adapted to execute an e-book application or program.

In certain embodiments the e-book viewer
determines if a touch down is input for one shortcut item among the shortcut item list and then, in a state where the touch down is input, a drag and touch up is input in the downward direction, and
when the touch down is input for the one shortcut item among the shortcut item list and then, in the state where the touch down is input, the drag and touch up is input in the downward direction, controls the display unit to display, on the screen, a sub item list of the one shortcut item.

In certain embodiments the e-book viewer
determines if a touch down is input for one sub item among the displayed sub item list and then, in a state where the touch down is input, a touch up is input, and
when the touch down is input for the one sub item among the displayed sub item list and then, in the state where the touch down is input, the touch up is input, controlling the display unit to display a page corresponding to the one sub item on the screen.

In certain embodiments the e-book viewer
determines if a touch down is input for one sub item among the displayed sub item list and then, in a state where the touch down is input, a drag and touch up is input in the upward direction, and
when the touch down is input for the one sub item among the displayed sub item list and then, in the state where the touch down is input, the drag and touch up is input in the upward direction, controls the display unit to remove the displaying of the sub item list of the one shortcut item on the screen.

In certain embodiments the e-book viewer
determines if a touch down is input in the upper UI activation region and then, in a state where the touch down is input, a drag and touch up is input in the left/right direction (i.e. left or right direction), and
when the touch down is input in the upper UI activation region and then, in the state where the touch down is input, the drag and touch up is input in the left/right direction, controls the display unit to display, on the screen, as much next/previous shortcut item list as the dragging in the upper UI activation region.

In certain embodiments the e-book viewer
determines if a multi touch down is input in the upper UI activation region and then, in a state where the multi touch down is input, a drag and touch up is input,
when the multi touch down is input in the upper UI activation region and then, in the state where the multi touch down is input, the drag and touch up is input, determines if a distance value between points where the multi touch down is input increases,
when it is determined that the distance value between the points where the multi touch down is input increases, controls the display unit to display a shortcut item list of an enlarged size corresponding to the increased distance value in the upper UI activation region of the screen, and
when it is determined that the distance value between the points where the multi touch down is input decreases, controls the display unit to display a shortcut item list of a reduced size corresponding to the decreased distance value in the upper UI activation region of the screen.

In certain embodiments the e-book viewer
determines if a long touch is input for one shortcut item among the shortcut item list displayed in the upper UI activation region of the e-book,
when the long touch is input for the one shortcut item among the shortcut item list displayed in the upper UI activation region of the e-book, determines if it is a state where a sub item list of the one shortcut item is being displayed in the upper UI activation region of the e-book,
when it is determined that it is not the state where the sub item list of the one shortcut item is being displayed in the upper UI activation region of the e-book, controls the display unit to display the sub item list of the one shortcut item in a size smaller than the shortcut item list between the one shortcut item and a next shortcut item in the upper UI activation region of the e-book, and
when it is the state where the sub item list of the one shortcut item is being displayed in the upper UI activation region of the e-book, controls the display unit to remove the displaying of the sub item list of the one shortcut item in the upper UI activation region of the e-book.

According to another aspect of the invention there is provided apparatus arranged to implement a method in accordance with any one of the above-described aspects, or any embodiment thereof.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating an apparatus construction of a portable terminal having an electronic book (e-book) function according to the present invention;
FIG. 2 is an example diagram illustrating a method for turning an e-book by one page in an analog manner in a portable terminal having an e-book function according to a first exemplary embodiment of the present invention;
FIG. 3 is a flowchart illustrating a method for turning an e-book by one page in an analog manner in a portable terminal having an e-book function according to a first exemplary embodiment of the present invention;
FIG. 4 is an example diagram illustrating a method for turning an e-book by several pages in an analog manner in a portable terminal having an e-book function according to a second exemplary embodiment of the present invention;
FIGS. 5A and 5B are a flowchart illustrating a method for turning an e-book by several pages in an analog manner in a portable terminal having an e-book function according to a second exemplary embodiment of the present invention;
FIG. 6 is an example diagram illustrating a method for supporting a bookmark for an e-book in a portable terminal having an e-book function according to a third exemplary embodiment of the present invention;
FIGS. 7A and 7B are a flowchart illustrating a method for supporting a bookmark for an e-book in a portable terminal having an e-book function according to a third exemplary embodiment of the present invention;
FIG. 8 is an example diagram illustrating a method for supporting shortcut for an e-book in a portable terminal having an e-book function according to a fourth exemplary embodiment of the present invention;
FIG. 9 is an example diagram illustrating a method for supporting shortcut for an e-book in a portable terminal having an e-book function according to a fourth exemplary embodiment of the present invention;
FIGS. 10A and 10B are a flowchart illustrating a method for supporting shortcut for an e-book in a portable terminal having an e-book function according to a fourth exemplary embodiment of the present invention; and
FIG. 11 is an example diagram illustrating a method for supporting shortcut for an e-book in a portable terminal having an e-book function according to a fourth exemplary embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. And, terms described below, which are defined considering functions in the present invention, can be different depending on user and operator's intention or practice. Therefore, the terms should be defined on the basis of the disclosure throughout this specification.

Exemplary embodiments of the present invention provide a way of turning electronic book (e-book) pages in an analog manner in a portable terminal having an e-book function.

In the following description, portable terminals are meaning inclusive of all of a cellular phone with a touch panel, a Personal Communication System (PCS), a Personal Data Assistant (PDA), an International Mobile Telecommunication - 2000 (IMT-2000) terminal and the like. The following description is made using general constructions of the examples.

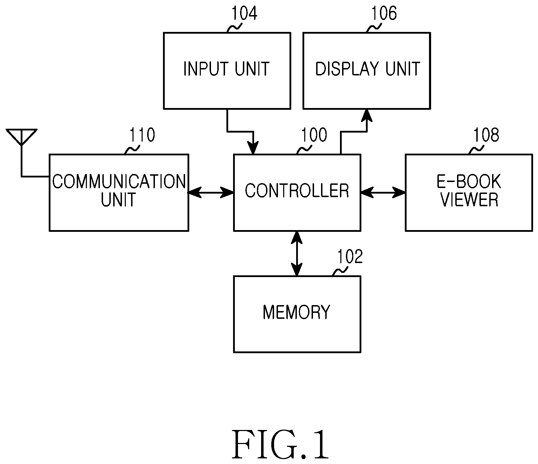

FIG. 1 is a block diagram illustrating an apparatus construction of a portable terminal having an e-book function according to the present invention.

As illustrated in FIG. 1, the portable terminal includes a controller 100, a memory 102, an input unit 104, a display unit 106, an e-book viewer 108, and a communication unit 110.

Referring to FIG. 1, the controller 100 controls a general operation of the portable terminal, and processes a function of turning e-book pages in an analog manner according to the present invention.

The memory 102 stores a microcode of a program for processing and controlling the controller 100 and a variety of reference data, temporary data generated in execution of a variety of programs, and a diversity of updateable depository data. Particularly, the memory 102 stores a program for turning e-book pages in an analog manner according to the present invention.

The input unit 104 has numeral key buttons and a plurality of function key buttons. The input unit 104 provides key button input data corresponding to a key button pressed by a user to the controller 100.

The display unit 106 displays state information generated during operation of the portable terminal, limited number of characters, a large amount of moving pictures and still pictures and the like. In addition to common functions, according to the present invention, the display unit 106 is formed in a form of a touch panel and performs a function of the input unit 104. That is, the display unit 106 senses a user's touch input and transmits the sensed touch input to the controller 100.

The e-book viewer 108 performs a role of turning an e-book by one page / by several pages in an analog manner such that a user can convert pages of contents naturally with a feeling as if he/she really turns a book. Further, the e-book viewer 108 supports a bookmark for the e-book.

The communication unit 110 performs a function of transmitting/receiving and processing a wireless signal input/output through an antenna. For example, in a transmission mode, the communication unit 110 performs a function of processing original data through channel coding and spreading, converting the original data into a Radio Frequency (RF) signal, and transmitting the RF signal. In a reception mode, the communication unit 110 performs a function of processing a received RF signal through de-spreading and channel decoding, and restoring the signal to original data.

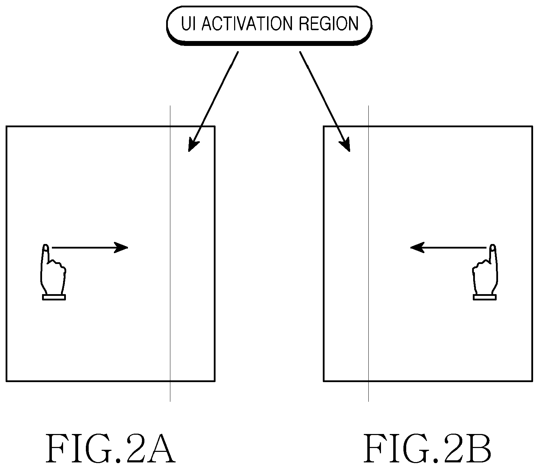

FIG. 2 is an example diagram illustrating a method for turning an e-book by one page in an analog manner in a portable terminal having an e-book function according to a first exemplary embodiment of the present invention.

Referring to FIG. 2, the terminal executes the e-book function, and displays, on a screen, a preset page of an e-book selected by a user. Here, a right partial region of the screen is defined as a right UI activation region, and a left partial region of the screen is defined as a left UI activation region. Here, the right UI activation region and the left UI activation region are preset suitable to a corresponding terminal.

As in FIG. 2A, if a touch down is input more left than the predetermined right UI activation region of the e-book and then, in a state where the touch down is input, a drag and touch up is input in the right direction, the terminal displays the just preceding page on the screen. As in FIG. 2B, if a touch down is input more right than the predetermined left UI activation region of the e-book and then, in a state where the touch down is input, a drag and touch up is input in the left direction, the terminal displays the just next page on the screen.

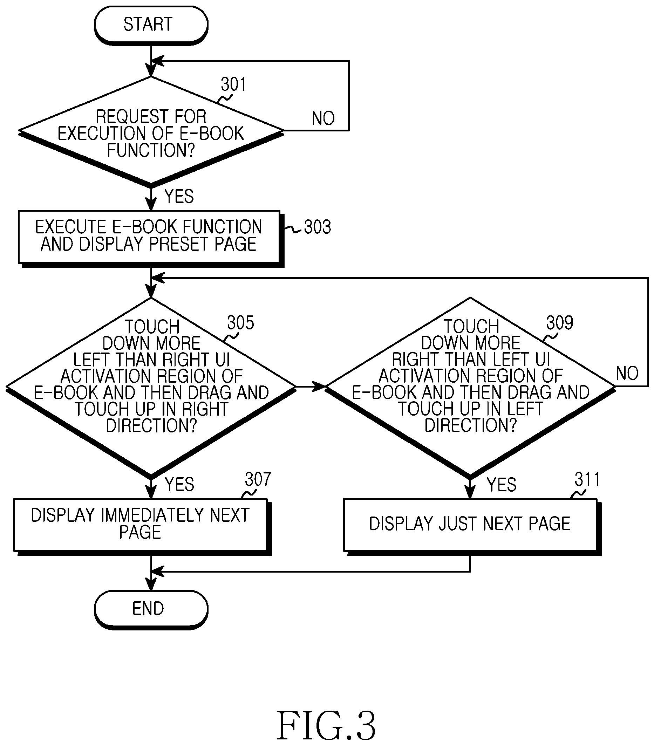

FIG. 3 is a flowchart illustrating a method for turning an e-book by one page in an analog manner in a portable terminal having an e-book function according to a first exemplary embodiment of the present invention.

Referring to FIG. 3, in step 301, the terminal determines if a request for execution of an e-book function is sensed according to user's key manipulation.

When it is determined in step 301 that the request for execution of the e-book function is sensed, in step 303, the terminal executes the e-book function and, according to setting information of the e-book function, displays a preset page of an e-book selected by a user. For example, the setting information of the e-book function can be preset to display the first page of a corresponding e-book or display the previously last displayed page of the corresponding e-book at the time of execution of the e-book function.

After that, in step 305, the terminal determines if a touch down is input more left than a predetermined right UI activation region of the e-book and then, in a state where the touch down is input, a drag and touch up is input in the right direction.

When it is determined in step 305 that the touch down is input more left than the predetermined right UI activation region of the e-book and then, in the state where the touch down is input, the drag and touch up is input in the right direction, in step 307, the terminal displays the just preceding page on the screen.

In contrast, when it is not determined in step 305 that the touch down is input more left than the predetermined right UI activation region of the e-book and then, in the state where the touch down is input, the drag and touch up is input in the right direction, in step 309, the terminal determines if a touch down is input more right than a predetermined left UI activation region of the e-book and then, in a state where the touch down is input, a drag and touch up is input in the left direction.

When it is determined in step 309 that the touch down is input more right than the predetermined left UI activation region of the e-book and then, in the state where the touch down is input, the drag and touch up is input in the left direction, in step 311, the terminal displays the just next page on the screen.

In contrast, when it is not determined in step 309 that the touch down is input more right than the predetermined left UI activation region of the e-book and then, in the state where the touch down is input, the drag and touch up is input in the left direction, the terminal returns to step 305 and repeatedly performs the subsequent steps.

After that, the terminal terminates the algorithm according to the exemplary embodiment of the present invention.

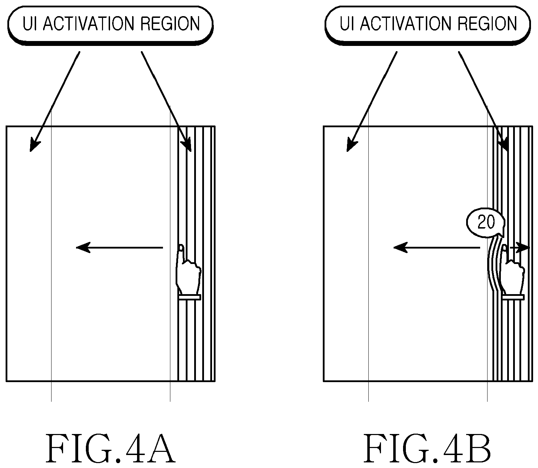

FIG. 4 is an example diagram illustrating a method for turning an e-book by several pages in an analog manner in a portable terminal having an e-book function according to a second exemplary embodiment of the present invention.

Referring to FIG. 4, the terminal executes the e-book function, and displays, on a screen, a preset page of an e-book selected by a user. Here, a right partial region of the screen is defined as a right UI activation region, and a left partial region of the screen is defined as a left UI activation region. Here, the right UI activation region and the left UI activation region are preset suitable to a corresponding terminal.

If a touch down is input in the predetermined right UI activation region of the e-book, the terminal displays the right side of the e-book. At this time, as in FIG. 4A, if a drag and touch up is input in the left direction in a state where the touch down is input in the predetermined right UI activation region, the terminal displays the just next page on the screen. In contrast, as in FIG. 4B, if a drag is input in the right direction in a state where the touch down is input in the predetermined right UI activation region, the terminal displays the number of pages increasing as much as the dragging on the right side of the e-book and, if a drag and touch up is input in the left direction in a state where the drag is input in the right direction, the terminal displays a next page corresponding to the number of the increased pages.

Although not illustrated, if a touch down is input in the predetermined left UI activation region of the e-book, the terminal displays the left side of the e-book. At this time, if a drag and touch up is input in the right direction in a state where the touch down is input in the predetermined left UI activation region, the terminal displays the just preceding page on the screen. In contrast, if a drag is input in the left direction in the state where the touch down is input in the predetermined left UI activation region, the terminal displays the number of pages decreasing as much as the dragging on the left side of the e-book and, if a drag and touch up is input in the right direction in a state where the drag is input in the left direction, the terminal displays a preceding page corresponding to the number of the decreased pages.

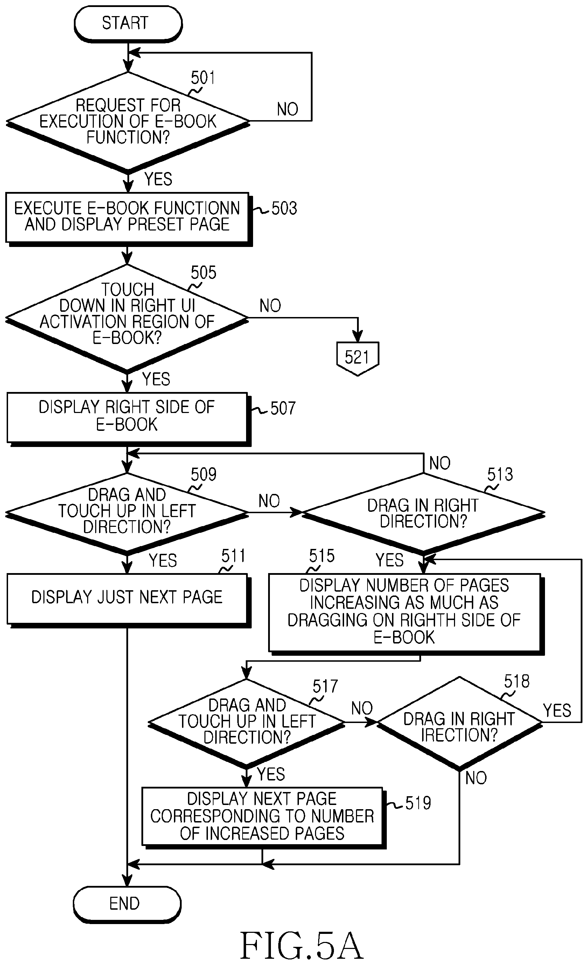

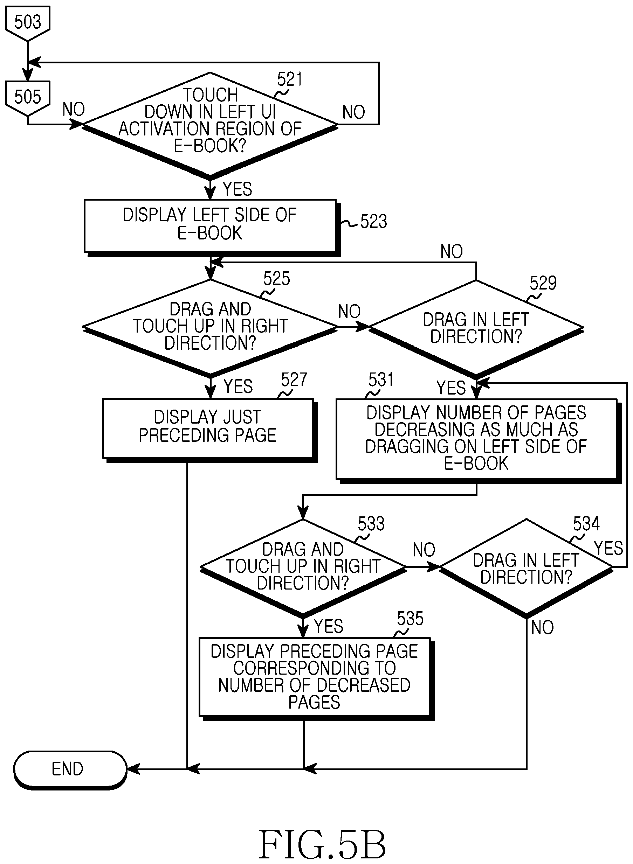

FIGS. 5A and 5B are a flowchart illustrating a method for turning an e-book by several pages in an analog manner in a portable terminal having an e-book function according to a second exemplary embodiment of the present invention.

Referring to FIGS. 5A and 5B, in step 501, the terminal determines if a request for execution of an e-book function is sensed according to user's key manipulation.

When it is determined in step 501 that the request for execution of the e-book function is sensed, in step 503, the terminal executes the e-book function and, according to setting information of the e-book function, displays a preset page of an e-book selected by a user. For example, the setting information of the e-book function can be preset to display the first page of a corresponding e-book or display the previously last displayed page of the corresponding e-book at the time of execution of the e-book function.

After that, in step 505, the terminal determines if a touch down is input in a predetermined right UI activation region of the e-book.

When it is determined in step 505 that the touch down is input in the predetermined right UI activation region of the e-book, in step 507, the terminal displays the right side of the e-book, and proceeds to step 509.

Next, in step 509, the terminal determines if a drag and touch up is input in the left direction in a state where the touch down is input in the predetermined right UI activation region.

When it is determined in step 509 that the drag and touch up is input in the left direction in the state where the touch down is input in the predetermined right UI activation region, in step 511, the terminal displays the just next page on the screen.

In contrast, when it is not determined in step 509 that the drag and touch up is input in the left direction in the state where the touch down is input in the predetermined right UI activation region, in step 513, the terminal determines if a drag is input in the right direction in the state where the touch down is input in the predetermined right UI activation region.

When it is determined in step 513 that the drag is input in the right direction in the state where the touch down is input in the predetermined right UI activation region, in step 515, the terminal displays the number of pages increasing as much as the dragging on the right side of the e-book and then, proceeds to step 517. Here, the number of pages displayed on the right side increases more and more fast according to the dragging.

After that, in step 517, the terminal determines if a drag and touch up is input in the left direction in the state where the drag is input in the right direction.

When it is determined in step 517 that the drag and touch up is input in the left direction in the state where the drag is input in the right direction, in step 519, the terminal displays a next page corresponding to the number of the increased pages.

When it is determined in step 517 that the drag and touch up is not input in the left direction in the state where the drag is input in the right direction, in step 518, the terminal determines if, in the state where the drag is input in the right direction, a drag is continuously input in the right direction.

When it is determined in step 518 that, in the state where the drag is input in the right direction, the drag is continuously input in the right direction, the terminal returns to step 515 and repeatedly performs the subsequent steps.

In contrast, when it is determined in step 518 that, in the state where the drag is input in the right direction, the drag is not continuously input in the right direction, the terminal terminates the algorithm according to the exemplary embodiment of the present invention. For example, in the state where the drag is input in the right direction, when a touch up is input without a drag of the left direction or right direction, the terminal terminates the algorithm according to the exemplary embodiment of the present invention.

In contrast, when it is determined in step 513 that the drag is not input in the right direction in the state where the touch down is input in the predetermined right UI activation region, the terminal returns to step 509 and repeatedly performs the subsequent steps.

In contrast, when it is determined in step 505 that the touch down is not input in the predetermined right UI activation region of the e-book, in step 521, the terminal determines if a touch down is input in a predetermined left UI activation region of the e-book.

When it is determined in step 521 that the touch down is input in the predetermined left UI activation region of the e-book, in step 523, the terminal displays the left side of the e-book, and proceeds to step 525.

After that, in step 525, the terminal determines if a drag and touch up is input in the right direction in the state where the touch down is input in the predetermined left UI activation region.

When it is determined in step 525 that the drag and touch up is input in the right direction in the state where the touch down is input in the predetermined left UI activation region, in step 527, the terminal displays the just preceding page on the screen.

In contrast, when it is determined in step 525 that the drag and touch up is not input in the right direction in the state where the touch down is input in the predetermined left UI activation region, in step 529, the terminal determines if a drag is input in the left direction in the state where the touch down is input in the predetermined left UI activation region.

When it is determined in step 529 that the drag is input in the left direction in the state where the touch down is input in the predetermined left UI activation region, in step 531, the terminal displays the number of pages decreasing as much as the dragging on the left side of the e-book and then, proceeds to step 533. Here, the number of pages displayed on the left side decreases more and more fast according to the dragging.

Next, in step 533, the terminal determines if a drag and touch up is input in the right direction in the state where the drag is input in the left direction.

When it is determined in step 533 that the drag and touch up is input in the right direction in the state where the drag is input in the left direction, in step 535, the terminal displays a preceding page corresponding to the number of the decreased pages.

In contrast, when it is determined in step 533 that the drag and touch up is not input in the right direction in the state where the drag is input in the left direction, in step 534, the terminal determines if, in the state where the drag is input in the left direction, a drag is continuously input in the left direction.

When it is determined in step 534 that, in the state where the drag is input in the left direction, the drag is continuously input in the left direction, the terminal returns to step 531 and repeatedly performs the subsequent steps.

In contrast, when it is determined in step 534 that, in the state where the drag is input in the left direction, the drag is not continuously input in the left direction, the terminal terminates the algorithm according to the exemplary embodiment of the present invention. For instance, in the state where the drag is input in the left direction, when a touch up is input without a drag of the left direction or right direction, the terminal terminates the algorithm according to the exemplary embodiment of the present invention.

In contrast, when it is determined in step 529 that the drag is not input in the left direction in the state where the touch down is input in the predetermined left UI activation region, the terminal returns to step 525 and repeatedly performs the subsequent steps.

In contrast, when it is determined in step 521 that the touch down is not input in the predetermined left UI activation region of the e-book, the terminal returns to step 505 and repeatedly performs the subsequent steps.

After that, the terminal terminates the algorithm according to the exemplary embodiment of the present invention.

On the other hand, an e-book function according to the present invention can be executed in various modes according to user's key manipulation. For example, the e-book function can be executed in a bookmark mode supporting a bookmark, a concavo-convex mode supporting shortcut and the like. Hereinafter, the execution of the e-book function of the bookmark mode supporting the bookmark is described by way of a third exemplary embodiment, and the execution of the e-book function of the concavo-convex mode supporting the shortcut is described by way of a fourth exemplary embodiment.

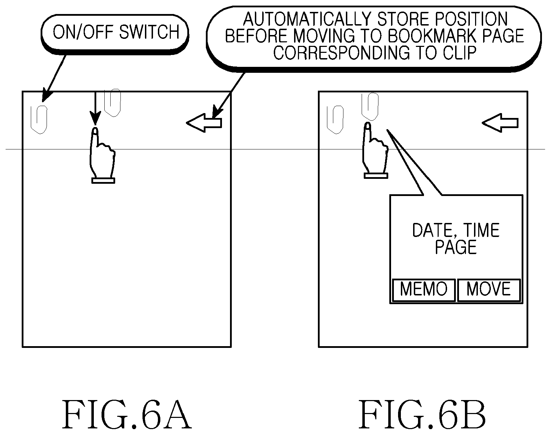

FIG. 6 is an example diagram illustrating a method for supporting a bookmark for an e-book in a portable terminal having an e-book function according to a third exemplary embodiment of the present invention.

Referring to FIG. 6, the terminal executes the e-book function and displays, on a screen, a preset page of an e-book selected by a user. After that, the terminal touches a bookmark On/Off switch to activate a bookmark function. At this time, an upper partial region of the screen is defined as an upper UI activation region, and the upper UI activation region is preset suitable to a corresponding terminal. The bookmark On/Off switch for activation/deactivation of the bookmark function can be positioned left in the predetermined upper UI activation region of the e-book. For example, the bookmark On/Off switch can be displayed in a clip shape. Further, a menu for automatically storing a position before moving to a bookmark page corresponding to a clip can be positioned right in the predetermined upper UI activation region of the e-book. For example, the menu can be displayed in an arrow shape.

As in FIG. 6A, if a touch down is input in the predetermined upper UI activation region of the e-book and then, in a state where the touch down is input, a drag is input in the downward direction, the terminal determines that there is a request for addition of a bookmark, and generates a clip corresponding to a bookmark to be added. Here, a position of the clip can move along a drag direction until before a touch up is input in a state where the drag is input in the downward direction. After that, if a touch up is input in the state where the drag is input in the downward direction, the terminal positions the generated clip in a position where the touch up is input. Here, a shape, color and the like of the generated clip can be set according to preset information. As a different method, the terminal may position the generated clip in a position where the touch up is input and simultaneously, display an input window through a popup window, receive an input of information of a shape, color and the like of the generated clip from a user, and change the shape, color and the like of the generated clip according to the received information.

As in FIG. 6B, if a touch down is input for a clip corresponding to a previously added bookmark, the terminal displays a corresponding bookmark page. If a long touch is sensed for the clip corresponding to the previously added bookmark, whose bookmark page has been displayed, the terminal determines that there is a request for displaying of information on the previously added bookmark, and displays the information on the previously added bookmark through a popup window. Here, the long touch represents a continuous touch for one or two seconds, and the information on the bookmark can include information of a generation date of the bookmark, a generation time, a bookmark page and the like. Further, the popup window can display not only information on a corresponding bookmark but also a memo menu for memo composition and a move menu for position change of the bookmark. In this case, if the memo menu is selected from a user, the terminal can display a memo window and receive an input of memos to be written about the bookmark. If the move menu is selected from the user, the terminal can perform a bookmark position change mode and receive an input of a changed position of a clip corresponding to the bookmark.

Although not illustrated, if a touch down is input for a clip corresponding to a previously added bookmark, the terminal displays a corresponding bookmark page. If a drag and touch up is input in the left/right direction in a state where the touch down is input for the clip corresponding to the previously added bookmark, whose bookmark page has been displayed, the terminal determines that there is a request for movement to the bookmark page corresponding to the previously added bookmark, and moves to the bookmark page.

Although not illustrated, if a touch down is input for a clip corresponding to a previously added bookmark and then, in a state where the touch down is input, a drag and touch up is input in the upward direction, the terminal determines that there is a request for removal of the previously added bookmark, and deletes a clip corresponding to the previously added bookmark.

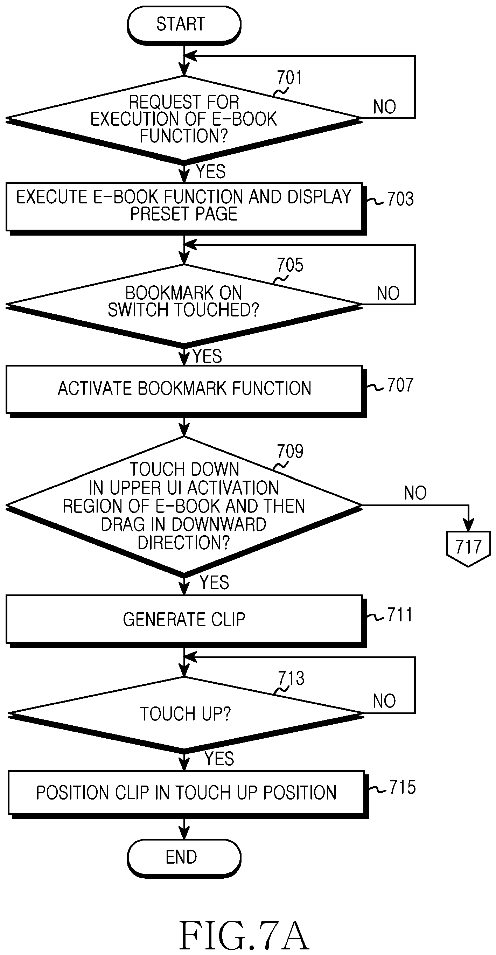

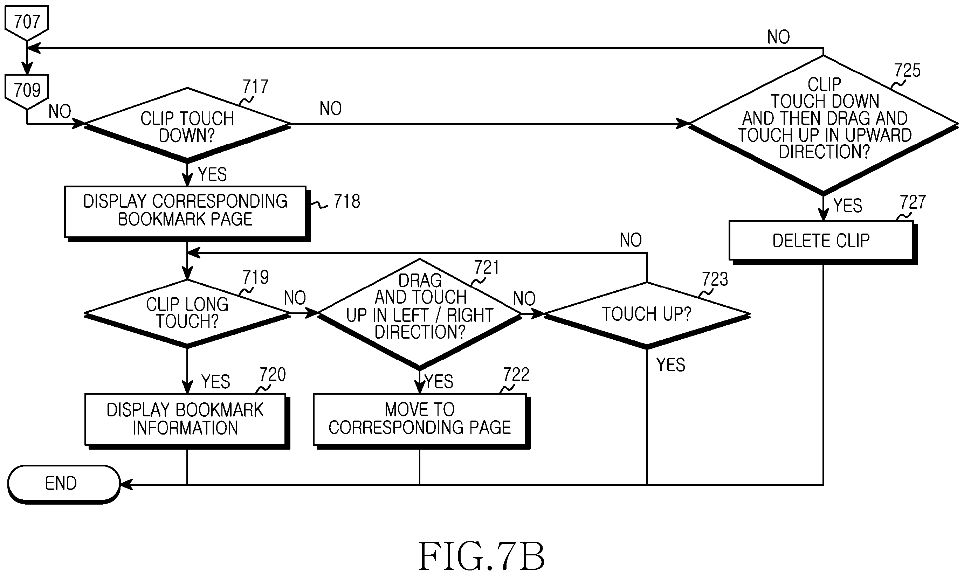

FIGS. 7A and 7B are a flowchart illustrating a method for supporting a bookmark for an e-book in a portable terminal having an e-book function according to a third exemplary embodiment of the present invention.

Referring to FIGS. 7A and 7B, in step 701, the terminal determines if a request for execution of an e-book function is sensed according to user's key manipulation.

When it is determined in step 701 that the request for execution of the e-book function is sensed, in step 703, the terminal executes the e-book function and, according to setting information of the e-book function, displays a preset page of an e-book selected by a user. For example, the setting information of the e-book function can be preset to display the first page of a corresponding e-book or display the previously last displayed page of the corresponding e-book at the time of execution of the e-book function.

Next, in step 705, the terminal determines if a bookmark On switch is touched (i.e., touch up after touch down). Here, the bookmark On switch can be, for example, positioned left in a predetermined upper UI activation region of the e-book, and can be displayed in a clip shape. According to another exemplary embodiment of the present invention, the bookmark On switch may be realized as one switch performing all of the function of a bookmark On switch and the function of a bookmark Off switch. In this case, in a case where the switch is touched in a bookmark Off state, the switch can transit to a bookmark On state to activate a bookmark function. In a case where the switch is touched in the bookmark On state, the switch can transit to the bookmark Off state to deactivate the bookmark function.

When it is determined in step 705 that the bookmark On switch is touched, in step 707, the terminal activates the bookmark function and then, proceeds to step 709.

Next, in step 709, the terminal determines if a touch down is input in the predetermined upper UI activation region of the e-book and then, in a state where the touch down is input, a drag is input in the downward direction.

When it is determined in step 709 that the touch down is input in the predetermined upper UI activation region of the e-book and then, in the state where the touch down is input, the drag is input in the downward direction, the terminal determines that there is a request for addition of a bookmark and, in step 711, generates a clip corresponding to a bookmark to be added and proceeds to step 713. Here, a position of the clip can move along a drag direction until before a touch up is input in a state where the drag is input in the downward direction.

Next, in step 713, the terminal determines if a touch up is input in the state where the drag is input in the downward direction.

When it is determined in step 713 that the touch up is input in the state where the drag is input in the downward direction, in step 715, the terminal positions the generated clip in a position where the touch up is input, and terminates the algorithm according to the exemplary embodiment of the present invention. Here, a shape, color and the like of the generated clip can be set according to preset information. As a different method, the terminal may position the generated clip in the position where the touch up is input and simultaneously, display an input window through a popup window, receive an input of information of the shape, color and the like of the generated clip from a user, and change the shape, color and the like of the generated clip according to the received information.

In contrast, when it is determined in step 709 that the touch down is input in the predetermined upper UI activation region of the e-book and then, in the state where the touch down is input, the drag is not input in the downward direction, in step 717, the terminal determines if a touch down is input for a clip corresponding to a previously added bookmark.

When it is determined in step 717 that the touch down is input for the clip corresponding to the previously added bookmark, in step 718, the terminal displays a corresponding bookmark page, and proceeds to step 719.

Next, in step 719, the terminal determines if a long touch is sensed for the clip corresponding to the previously added bookmark, whose bookmark page has been displayed. Here, the long touch represents a continuous touch for one or two seconds, for example.

When it is determined in step 719 that the long touch is sensed for the clip corresponding to the previously added bookmark, whose bookmark page has been displayed, the terminal determines that there is a request for displaying of information on the previously added bookmark, whose bookmark page has been displayed and, in step 720, displays the information on the previously added bookmark through a popup window and terminates the algorithm according to the exemplary embodiment of the present invention. Here, the information on the bookmark can include information of a generation date of the bookmark, a generation time, a bookmark page and the like. Further, the popup window can display not only information on a corresponding bookmark but also a memo menu for memo composition and a move menu for position change of a corresponding bookmark. In this case, if the memo menu is selected from a user, the terminal can display a memo window and receive an input of memos to be written about the bookmark. If the move menu is selected from the user, the terminal can perform a bookmark position change mode and receive an input of a changed position of a clip corresponding to the bookmark.

In contrast, when it is determined in step 719 that the long touch is not sensed for the clip corresponding to the previously added bookmark, whose bookmark page has been displayed, in step 721, the terminal determines if a drag and touch up is input in the left/right direction in a state where the touch down is input for the clip corresponding to the previously added bookmark.

When it is determined in step 721 that the drag and touch up is input in the left/right direction in the state where the touch down is input for the clip corresponding to the previously added bookmark, the terminal determines that there is a request for movement to the bookmark page corresponding to the previously added bookmark, which has been displayed and, in step 722, moves to the bookmark page and terminates the algorithm according to the exemplary embodiment of the present invention.

In contrast, when it is determined in step 721 that the drag and touch up is not input in the left/right direction in the state where the touch down is input for the clip corresponding to the previously added bookmark, in step 723, the terminal determines if a touch up is input in the state where the touch down is input for the clip corresponding to the previously added bookmark.

When it is determined in step 723 that the touch up is input in the state where the touch down is input for the clip corresponding to the previously added bookmark, the terminal terminates the algorithm according to the exemplary embodiment of the present invention.

In contrast, when it is determined in step 723 that the touch up is not input in the state where the touch down is input for the clip corresponding to the previously added bookmark, the terminal returns to step 719 and repeatedly performs the subsequent steps.

In contrast, when it is determined in step 717 that the touch down is not input for the clip corresponding to the previously added bookmark, in step 725, the terminal determines if a touch down is input for a clip corresponding to a previously added bookmark and then, in a state where the touch down is input, a drag and touch up is input in the upward direction (e.g., till the end of the upward direction).

When it is determined in step 725 that the touch down is input for the clip corresponding to the previously added bookmark and then, in the state where the touch down is input, the drag and touch up is input in the upward direction, the terminal determines that there is a request for removal of the previously added bookmark and, in step 727, the terminal deletes the clip corresponding to the previously added bookmark and terminates the algorithm according to the exemplary embodiment of the present invention.

In contrast, when it is determined in step 725 that the touch down is input for the clip corresponding to the previously added bookmark and then, in the state where the touch down is input, the drag and touch up is not input in the upward direction, the terminal returns to step 709 and repeatedly performs the subsequent steps.

Next, the terminal terminates the algorithm according to the exemplary embodiment of the present invention.

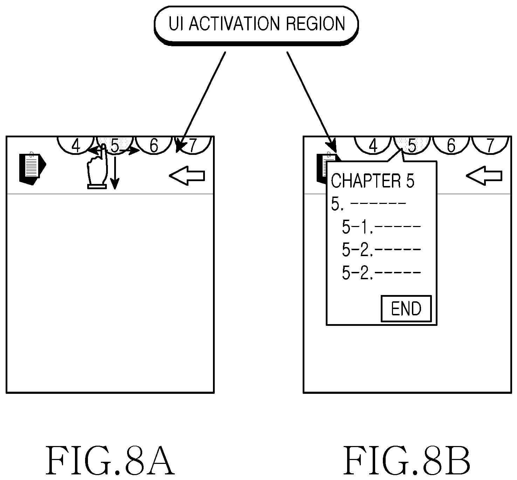

FIG. 8 is an example diagram illustrating a method for supporting shortcut for an e-book in a portable terminal having an e-book function according to a fourth exemplary embodiment of the present invention.

Referring to FIG. 8, the terminal executes the e-book function and displays, on a screen, a preset page of an e-book selected by a user. After that, a shortcut On/Off switch is touched to activate a shortcut function. At this time, an upper partial region of the screen is defined as an upper UI activation region, and the upper UI activation region is preset suitable to a corresponding terminal. The shortcut On/Off switch for activation/deactivation of the shortcut function can be positioned left in the predetermined upper UI activation region of the e-book. For example, the shortcut On/Off switch can be displayed in a document shape. Further, a menu for automatically storing a position before moving to a page corresponding to a shortcut item can be positioned right in the predetermined upper UI activation region of the e-book. For example, the menu can be displayed in an arrow shape. Here, the shortcut item, which is an item enabling quick movement to a corresponding page according to user's key manipulation, is arranged in predefined order in the upper UI activation region of the e-book. For example, the shortcut item can be composed of a chapter intended for quick move, a table, a picture, a page and the like.

As in FIG. 8A, if a touch down is input for one shortcut item among a shortcut item list displayed in the upper UI activation region of the e-book and then, in a state where the touch down is input, a drag and touch up is input in the left/right direction, the terminal determines if there is a request for shortcut to a corresponding page, and displays the page corresponding to the one shortcut item. Or, if a touch down is input for one shortcut item among the shortcut item list displayed in the upper UI activation region of the e-book and then, in a state where the touch down is input, a drag and touch up is input in the downward direction, as in FIG. 8B, the terminal displays a sub item list of the one shortcut item on a screen through a popup window. For example, in a case where the one shortcut item is Chapter 5, the sub item list can be composed of Chapters 5-1, 5-2, 5-3 and the like and, in the popup window, the sub item list, a title of each sub item and the like can be displayed.

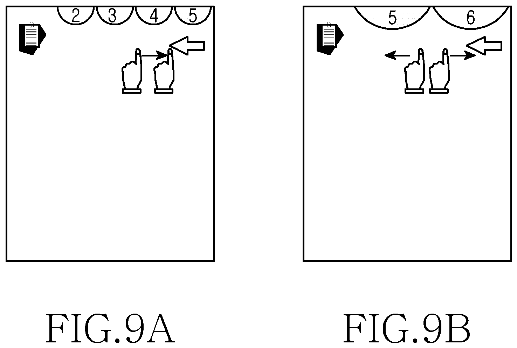

FIG. 9 is an example diagram illustrating a method for supporting shortcut for an e-book in a portable terminal having an e-book function according to a fourth exemplary embodiment of the present invention.

Referring to FIG. 9, as in FIG. 9A, if a touch down is input in an upper UI activation region of an e-book and then, in a state where the touch down is input, a drag and touch up is input in the left/right direction, the terminal displays as much next/previous shortcut item list as the dragging in the upper UI activation region of a screen. For example, in a case where a shortcut item list currently displayed on a screen is Chapters 4, 5, 6, and 7, the terminal can display Chapters 2, 3, 4, and 5 listed in a previous shortcut item list, according to the dragging on the screen.

As in FIG. 9B, if a multi touch down is input in an upper UI activation region of an e-book and then, in a state where the multi touch down is input, a drag and touch up is input, the terminal determines if a distance value between points where the multi touch down is input increases. If it is determined that the distance value increases, the terminal displays a shortcut item list of an enlarged size corresponding to the increased distance value in the upper UI activation region of a screen. If it is determined that the distance value decreases, the terminal displays a shortcut item list of a reduced size corresponding to the decreased distance value in the upper UI activation region of the screen. For example, in a case where the shortcut item list currently displayed on the screen is Chapters 4, 5, 6, and 7, among them, Chapters 5 and 6 can be displayed in the enlarged size on the screen.

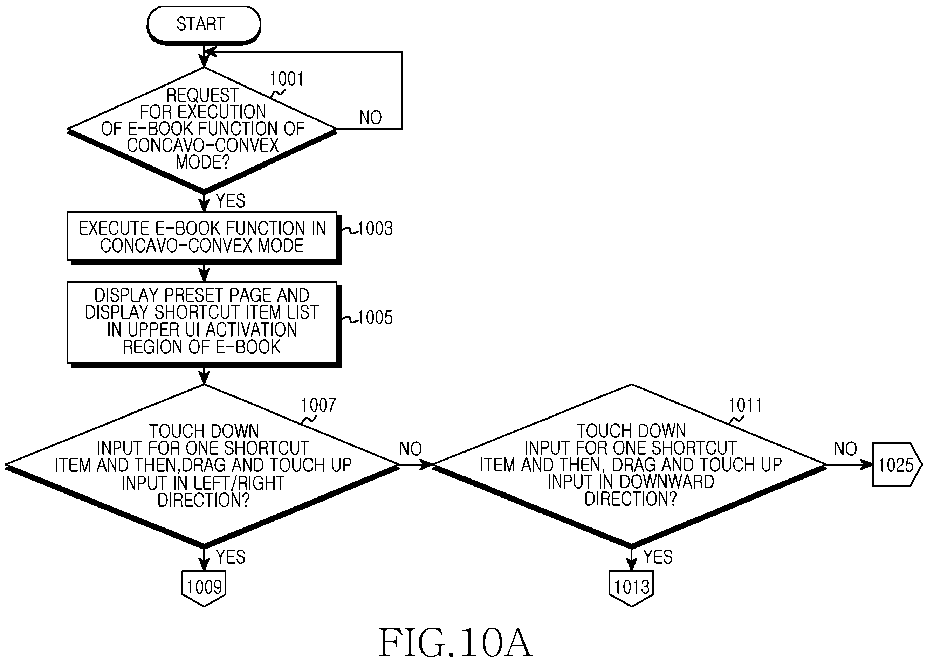

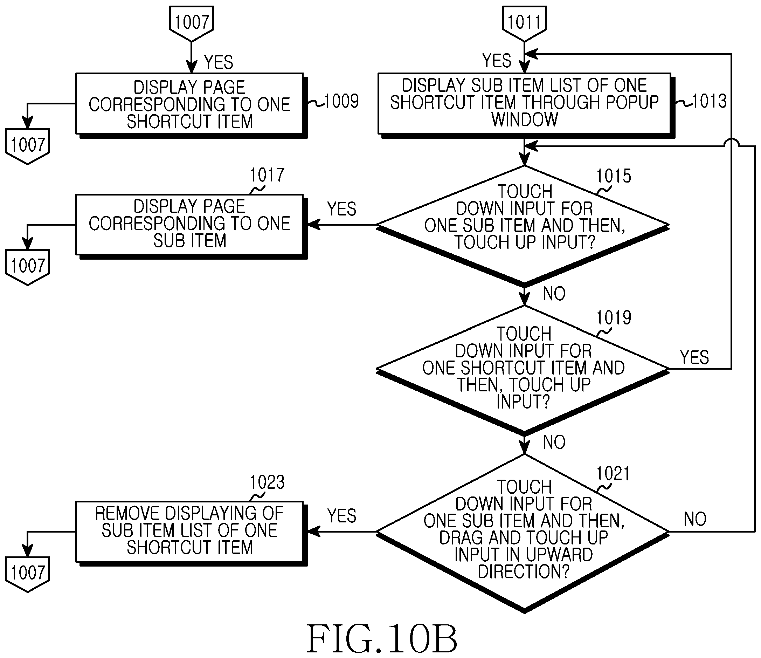

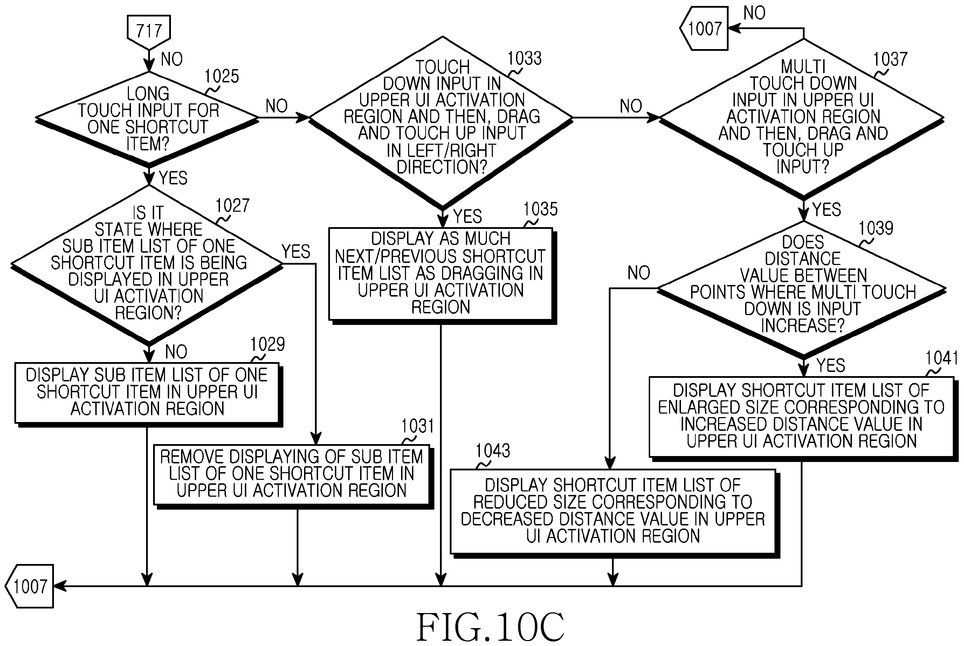

FIGS. 10A and 10B are a flowchart illustrating a method for supporting shortcut for an e-book in a portable terminal having an e-book function according to a fourth exemplary embodiment of the present invention.

Referring to FIGS. 10A and 10B, in step 1001, the terminal determines if a request for execution of an e-book function of a concavo-convex mode is sensed according to user's key manipulation. This can be determined by identifying if a touch (i.e., touch up after touch down) for a shortcut On switch is sensed. Here, the shortcut On switch can be, for example, positioned left in a predetermined upper UI activation region of an e-book, and can be displayed in a document shape. According to another exemplary embodiment, the shortcut On switch may be realized as one switch performing all of the function of a shortcut On switch and the function of a shortcut Off switch. In this case, in a case where a user touches the switch in a shortcut Off state, the switch transits to a shortcut On state and accordingly, a shortcut function is activated and the e-book function of the concavo-convex mode is executed. In a case where the user touches the switch in the shortcut On state, the switch transits to the shortcut Off state and accordingly, the shortcut function is deactivated and the e-book function of the concavo-convex mode is execution-terminated.

When the request for execution of the e-book function of the concavo-convex mode is sensed in step 1001, in step 1003, the terminal executes the e-book function in the concavo-convex mode supporting the shortcut.

After that, in step 1005, the terminal displays a preset page of an e-book selected by a user according to setting information of the e-book function, and displays a shortcut item list in the upper UI activation region of the e-book. For example, the setting information of the e-book function can be preset to display the first page of a corresponding e-book or display the previously last displayed page of the corresponding e-book at the time of execution of the e-book function.

Next, in step 1007, the terminal determines if a touch down is input for one shortcut item among the shortcut item list displayed in the upper UI activation region of the e-book according to user's key manipulation and then, in a state where the touch down is input, a drag and touch up is input in the left/right direction. Here, by distinguishing the one shortcut item and the remnant shortcut items through colors, patterns and the like, the terminal can inform a user that the touch down is input for the one shortcut item. Further, the terminal can inform the user that the touch down is input for the one shortcut item, through a voice, a vibration and the like.

When it is determined in step 1007 that the touch down is input for the one shortcut item among the shortcut item list displayed in the upper UI activation region of the e-book and then, in the state where the touch down is input, the drag and touch up is input in the left/right direction, the terminal determines that there is a request for shortcut to a corresponding page and, in step 1009, displays the page corresponding to the one shortcut item on a screen and then, returns to step 1007 and repeatedly performs the subsequent steps. Here, the terminal can inform a user of quick moving to the page corresponding to the one shortcut item, through a voice, a vibration and the like.

In contrast, when it is not determined in step 1007 that the touch down is input for the one shortcut item among the shortcut item list displayed in the upper UI activation region of the e-book and then, in the state where the touch down is input, the drag and touch up is input in the left/right direction, in step 1011, the terminal determines if a touch down is input for one shortcut item among the shortcut item list displayed in the upper UI activation region of the e-book according to user's key manipulation and then, in a state where the touch down is input, a drag and touch up is input in the downward direction.

When it is determined in step 1011 that the touch down is input for the one shortcut item among the shortcut item list displayed in the upper UI activation region of the e-book and then, in the state where the touch down is input, the drag and touch up is input in the downward direction, in step 1013, the terminal displays a sub item list of the one shortcut item on the screen through a popup window and then, proceeds to step 1015. For example, in a case where the one shortcut item is Chapter 5, the sub item list can be composed of Chapters 5-1, 5-2, 5-3 and the like and, in the popup window, the sub item list, a title of each sub item and the like can be displayed.

Next, in step 1015, the terminal determines if a touch down is input for one sub item among the sub item list displayed on the screen through the popup window according to user's key manipulation and then, in a state where the touch down is input, a touch up is input. Here, by distinguishing the sub item for which the touch down is currently input and the remnant sub items among the sub item list through colors, patterns and the like, the terminal can inform a user of the sub item for which the touch down is currently input. Further, the terminal can inform the user of information on the sub item for which the touch down is currently input among the sub item list, through a voice, a vibration and the like. For example, the terminal can output "Title of Chapter 5-1 is [Understanding of Physics]", through a voice.

When it is determined in step 1015 that the touch down is input for the one sub item among the sub item list displayed on the screen through the popup window and then, in the state where the touch down is input, the touch up is input, in step 1017, the terminal displays a page corresponding to the one sub item on the screen. Here, the terminal can inform a user of quick moving to the page corresponding to the one sub item.

In contrast, when it is determined in step 1015 that the touch down is input for the one sub item among the sub item list displayed on the screen through the popup window and then, in the state where the touch down is input, the touch up is not input, in step 1019, the terminal determines if a touch down is input for one shortcut item among the shortcut item list displayed in the upper UI activation region of the e-book according to user's key manipulation and then, in a state where the touch down is input, a touch up is input.

When it is determined in step 1019 that the touch down is input for the one shortcut item among the shortcut item list displayed in the upper UI activation region of the e-book and then, in the state where the touch down is input, the touch up is input, the terminal returns to step 1013 and repeatedly performs the subsequent steps.

In contrast, when it is determined in step 1019 that the touch down is input for the one shortcut item among the shortcut item list displayed in the upper UI activation region of the e-book and then, in the state where the touch down is input, the touch up is not input, in step 1021, the terminal determines if a touch down is input for one sub item among the sub item list displayed on the screen through the popup window according to user's key manipulation and then, in a state where the touch down is input, a drag and touch up is input in the upward direction.

When it is determined in step 1021 that the touch down is input for the one sub item among the sub item list displayed on the screen through the popup window according to the user's key manipulation and then, in the state where the touch down is input, the drag and touch up is input in the upward direction, in step 1023, the terminal removes the displaying of the sub item list of the one shortcut item through the popup window on the screen and then, returns to step 1007 and repeatedly performs the subsequent steps. Here, the terminal can inform a user of removing the displaying of the sub item list of the one shortcut item through the popup window on the screen, through a voice, a vibration and the like. Or, as a different method, the terminal may determine if a touch down is input for the remnant regions excepting a region of a screen where a sub item list is displayed and then, in a state where the touch down is input, a touch up is input and, in a case where the touch down is input for the remnant regions excepting the region of the screen where the sub item list is displayed and then, in a state where the touch down is input, a touch up is input, the terminal may remove the displaying of the sub item list of the one shortcut item through the popup window on the screen.

In contrast, when it is determined in step 1021 that the touch down is input for the one sub item among the sub item list displayed on the screen through the popup window and then, in the state where the touch down is input, the drag and touch up is not input in the upward direction, the terminal returns to step 1015 and repeatedly performs the subsequent steps.

In contrast, when it is determined in step 1011 that the touch down is input for the one shortcut item among the shortcut item list displayed in the upper UI activation region of the e-book and then, in the state where the touch down is input, the drag and touch up is not input in the downward direction, in step 1025, the terminal determines if a long touch is input for one shortcut item among the shortcut item list displayed in the upper UI activation region of the e-book according to user's key manipulation.

When it is determined in step 1025 that the long touch is input for the one shortcut item among the shortcut item list displayed in the upper UI activation region of the e-book according to the user's key manipulation, in step 1027, the terminal determines if it is a state where a sub item list of the one shortcut item is being displayed in the upper UI activation region of the e-book according to user's key manipulation.

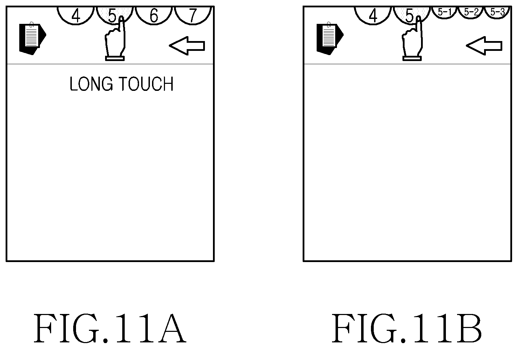

When it is determined in step 1027 that it is not the state where the sub item list of the one shortcut item is being displayed in the upper UI activation region of the e-book, in step 1029, the terminal displays the sub item list of the one shortcut item in the upper UI activation region of the e-book and then, returns to step 1007 and repeatedly performs the subsequent steps. For example, as in FIG. 11, the sub item list of the one shortcut item can be displayed in a size smaller than the shortcut item list between the one shortcut item and a next shortcut item. Here, the terminal can inform a user of displaying a sub item list of the one shortcut item in the upper UI activation region of the e-book, through a voice, a vibration and the like.

In contrast, when it is determined in step 1027 that it is the state where the sub item list of the one shortcut item is being displayed in the upper UI activation region of the e-book, in step 1031, the terminal removes the displaying of the sub item list of the one shortcut item in the upper UI activation region of the e-book and then, returns to step 1007 and repeatedly performs the subsequent steps. Here, the terminal can inform a user of removing the displaying of the sub item list of the one shortcut item in the upper UI activation region of the e-book, through a voice, a vibration and the like.

In contrast, when it is determined in step 1025 that the long touch is not input for the one shortcut item among the shortcut item list displayed in the upper UI activation region of the e-book, in step 1033, the terminal determines if a touch down is input in the upper UI activation region of the e-book according to user's key manipulation and then, in a state where the touch down is input, a drag and touch up is input in the left/right direction.

When it is determined in step 1033 that the touch down is input in the upper UI activation region of the e-book and then, in the state where the touch down is input, the drag and touch up is input in the left/right direction, in step 1035, the terminal displays as much next/previous shortcut item list as the dragging in the upper UI activation region of the screen and then, returns to step 1007 and repeatedly performs the subsequent steps. For example, in a case where the shortcut item list currently displayed on the screen is Chapters 4, 5, 6 and 7, Chapters 2, 3, 4, and 5 listed in a previous shortcut item list can be displayed according to the dragging on the screen. Here, the terminal can inform a user of moving to the next/previous shortcut item list, through a voice, a vibration and the like.

In contrast, when it is not determined in step 1033 that the touch down is input in the upper UI activation region of the e-book and then, in the state where the touch down is input, the drag and touch up is input in the left/right direction, in step 1037, the terminal determines if a multi touch down is input in the upper UI activation region of the e-book according to user's key manipulation and then, in a state where the multi touch down is input, a drag and touch up is input.

When it is determined in step 1037 that the multi touch down is input in the upper UI activation region of the e-book and then, in the state where the multi touch down is input, the drag and touch up is input, in step 1039, the terminal determines if a distance value between points where the multi touch down is input increases.

When it is determined in step 1039 that the distance value between the points where the multi touch down is input increases, in step 1041, the terminal displays a shortcut item list of an enlarged size corresponding to the increased distance value in the upper UI activation region of the screen and then, returns to step 1007 and repeatedly performs the subsequent steps. Here, the terminal can inform a user of the displaying of the shortcut item list of the enlarged size, through a voice, a vibration and the like. For example, in a case where the shortcut item list currently displayed on the screen is Chapters 4, 5, 6, and 7, among them, Chapters 5 and 6 can be displayed in the enlarged size on the screen.

In contrast, when it is determined in step 1039 that the distance value between the points where the multi touch down is input decreases, in step 1043, the terminal displays a shortcut item list of a reduced size corresponding to the decreased distance value in the upper UI activation region of the screen and then, returns to step 1007 and repeatedly performs the subsequent steps. Here, the terminal can inform a user of the displaying of the shortcut item list of the reduced size, through a voice, a vibration and the like. For example, in a case where the shortcut item list currently displayed on the screen is Chapters 4, 5, 6, and 7, Chapters 2, 3, 4, 5, 6, 7, 8, and 9 can be displayed in the reduced size on the screen.

In contrast, when it is determined in step 1037 that the multi touch down is input in the upper UI activation region of the e-book and then, in the state where the multi touch down is input, the drag and touch up is not input, the terminal returns to step 1007 and repeatedly performs the subsequent steps.

Next, the terminal terminates the algorithm according to the exemplary embodiment of the present invention.

FIG. 11 is an example diagram illustrating a method for supporting shortcut for an e-book in a portable terminal having an e-book function according to a fourth exemplary embodiment of the present invention.

Referring to FIG. 11, if a long touch is input for one shortcut item among a shortcut item list displayed in an upper UI activation region of an e-book as in FIG. 11A, the terminal displays a sub item list of the one shortcut item in the upper UI activation region of the e-book as in FIG. 11B. For example, the sub item list of the one shortcut item can be displayed in a size smaller than the shortcut item list between the one shortcut item and a next shortcut item. Here, the terminal can inform a user of the displaying of the sub item list of the one shortcut item in the upper UI activation region of the e-book, through a voice, a vibration and the like.

Although not illustrated, if a long touch is input for one shortcut item in a state where a sub item list of the one shortcut item is displayed in an upper UI activation region of an e-book, the terminal removes the displaying of the sub item list of the one shortcut item in the upper UI activation region of the e-book. Here, the terminal can inform a user of removing the displaying of the sub item list of the one shortcut item in the upper UI activation region of the e-book, through a voice, a vibration and the like.

As described above, exemplary embodiments of the present invention have an advantage that, although not learning an equipment use method, a user can convert pages of contents naturally with a feeling as if he/she really turns a book, by providing a UI of turning e-book pages in an analog manner in a portable terminal having an e-book function.

While the invention has been shown and described with reference to certain preferred embodiments thereof, it will be understood by those skilled in the art that various changes in form and details may be made therein without departing from the scope of the invention as defined by the appended claims.

It will be appreciated that embodiments of the present invention can be realized in the form of hardware, software or a combination of hardware and software. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method for turning electronic book, e-book, pages in a portable terminal having an e-book function, the method comprising:
displaying (503) a page of an e-book on a screen of the portable terminal;
detecting a touch in a right (505) user interface, UI, activation region of the e-book or a left (521) UI activation region of the e-book;
displaying the right UI activation region (507) or the left UI activation region (523) on the at least one side of the e-book;
displaying a number of page to be turned at a position adjacent to a drag on the right (513) UI activation region or the left (529) UI activation region, wherein the number of the page to be turned increases (515) or decreases (531) respectively, corresponding to the amount of the drag of the detected touch;
moving to a page of the e-book corresponding to the number of the page according to releasing the drag and touch up in left direction (517) or in right direction (533); and
displaying (519) the next page corresponding to the number of increased pages (519) or decreased pages (535), respectively.

2. The method of claim 1, further comprising:
determining a right partial region of the screen as a right UI activation region; and
determining a left partial region of the screen as a left UI activation region.

3. The method of claim 2, wherein displaying the preceding page of the page or displaying the next page of the page comprising:
displaying (527) the preceding page of the page when the touch movement is detected to the right direction while the touch is input in the left UI activation region; and
displaying (511) the next page of the page when the touch movement is detected to the left direction while the touch is input in the right UI activation region.

4. The method of claim 1, further comprising:
determining (705) whether a bookmark on switch is touched on an upper UI activation region of the e-book; and
when the bookmark on switch is touched on the upper UI activation region of the e-book, activating a bookmark function.

5. The method of claim 1, further comprising:
determining whether a bookmark generation gesture is input, the bookmark generation comprising a contact that starts in the upper UI activation region of the e-book, followed by a downward drag while maintaining the contact;
when the bookmark generation is input, generating (711) a clip corresponding to a bookmark to be added;
determining (713) whether the contact is released after the bookmark generation is input; and
when the contact is released after the generate bookmark gesture, positioning (715) the generated clip at a position where the contact is released.

6. An apparatus for turning electronic book, e-book, pages in a portable terminal having an e-book function, the apparatus comprising:
an e-book viewer (108) for executing an e-book, controlling a display unit (106) to display a page of the e-book; and
a controller (100) configured to:
detect a touch in a right user interface, UI, activation region of the e-book or a left UI activation region of the e-book;
display the right UI activation region or the left UI activation region on the at least one side of the e-book;
display a number of page to be turned at a position adjacent to a drag on the right UI activation region or the left UI activation region, wherein the number of the page to be turned increases or decreases, respectively, corresponding to the amount of the drag of the detected touch;
move to a page of the e-book corresponding to the number of the page according to releasing the drag and touch up in left direction or in right direction; and
display the next page corresponding to the number of increased pages or decreased pages, respectively.

7. The apparatus of claim 6, wherein the controller (100) is further configured to:
determine a right partial region of the screen as a right UI activation region, and
determine a left partial region of the screen as a left UI activation region.

8. The apparatus of claim 6, wherein the controller (100) is further configured to:
display the preceding page of the page when the touch movement is detected to the right direction while the touch is input in the left UI activation region; and
display the next page of the page when the touch movement is detected to the left direction while the touch is input in the right UI activation region.

9. The apparatus of claim 6, wherein the controller (100) is further configured to:
determine whether a bookmark on switch is touched on an upper UI activation region of the e-book, and
when the bookmark on switch is touched on the upper UI activation region of the e-book, activate a bookmark function.

10. The apparatus of claim 9, wherein the controller (100) is further configured to:
determine whether a bookmark generation gesture is input, the bookmark generation gesture comprising a contact that starts in the upper UI activation region of the e-book, followed by a downward drag,
when the bookmark generation gesture is input, generate a clip corresponding to a bookmark to be added,
determine whether the touch is released after the bookmark generation gesture is input, and
when the contact is released after the bookmark generation gesture, position the generated clip at a position where the contact is released.

## Patentansprüche

1. Verfahren zum Blättern von Seiten eines elektronischen Buchs, e-Books, in einem tragbaren Endgerät, das eine e-Book-Funktion aufweist, wobei das Verfahren umfasst:
ein Anzeigen (503) einer Seite eines e-Books auf einem Bildschirm des tragbaren Endgeräts;
ein Detektieren einer Berührung in einer rechten (505) Nutzeroberflächen-(UI)-Aktivierungsregion des e-Book oder einer linken (521) UI-Aktivierungsregion des e-Books;
ein Anzeigen der rechten UI-Aktivierungsregion (507) oder der linken UI-Aktivierungsregion (523)
auf der mindestens einen Seite des e-Books;
ein Anzeigen einer Anzahl von umzublätternden Seiten an einer Position benachbart zu einem Ziehen auf der rechten (513) UI-Aktivierungsregion oder der linken (529)
UI-Aktivierungsregion, wobei die Anzahl der umzublätternden Seiten entsprechend dem Ausmaß des Ziehens der detektierten Berührung zunimmt (515) bzw. abnimmt (531);
ein Bewegen zu einer Seite des e-Books, die der Anzahl der Seiten entspricht, gemäß dem Loslassen des Ziehens und einer Berührung in einer linken Richtung (517) oder einer rechten Richtung (533); und
ein Anzeigen (519) der nächsten Seite entsprechend der Anzahl zugenommener (519) bzw. abgenommener Seiten (535).

2. Verfahren nach Anspruch 1, ferner umfassend:
ein Bestimmen einer rechten Teilregion des Bildschirms als eine rechte UI-Aktivierungsregion; und
ein Bestimmen einer linken Teilregion des Bildschirms als eine linke UI-Aktivierungsregion.

3. Verfahren nach Anspruch 2, wobei das Anzeigen der vorangehenden Seite der Seite oder das Anzeigen der nächsten Seite der Seite umfasst:
ein Anzeigen (527) der vorangehenden Seite der Seite, wenn die Berührungsbewegung in die rechte Richtung detektiert wird, während die Berührung in der linken UI-Aktivierungsregion eingegeben wurde; und
ein Anzeigen (511) der nächsten Seite der Seite, wenn die Berührungsbewegung in die linke Richtung detektiert wird, während die Berührung in der rechten UI-Aktivierungsregion eingegeben wurde.

4. Verfahren nach Anspruch 1, ferner umfassend:
ein Bestimmen (705), ob ein Lesezeichen ein-Schalter auf einer oberen UI-Aktivierungsregion des e-Books berührt wird; und
wenn der Lesezeichen ein-Schalter auf der oberen UI-Aktivierungsregion des e-Books berührt wird, ein Aktivieren einer Lesezeichenfunktion.

5. Verfahren nach Anspruch 1, ferner umfassend:
ein Bestimmen, ob eine Lesezeichengenerierungsgeste eingegeben wird, wobei die Lesezeichengenerierung einen Kontakt umfasst, der in der oberen UI-Aktivierungsregion des e-Books beginnt, gefolgt von einem nach unten gerichteten Ziehen, während der Kontakt gehalten wird;
wenn die Lesezeichengenerierung eingegeben wurde, ein Generieren (711) einer Klammer, entsprechend einem hinzuzufügenden Lesezeichen;
ein Bestimmen (713), ob der Kontakt nach der Eingabe der Lesezeichengenerierung losgelassen wird, und
wenn der Kontakt nach der Lesezeichengenerierungsgeste losgelassen wird, ein Positionieren (715) der generierten Klammer an einer Position, wo der Kontakt losgelassen wird.

6. Vorrichtung zum Blättern von Seiten eines elektronischen Buchs, e-Books, in einem tragbaren Endgerät, das eine e-Book-Funktion aufweist, wobei die Vorrichtung umfasst:
einen e-Book-Viewer (108) zum Ausführen eines e-Books, Steuern einer Anzeigeeinheit (106), um eine Seite des e-Books anzuzeigen; und
eine Steuerung (100), die konfiguriert ist, um:
eine Berührung in einer rechten Nutzeroberflächen-(UI)-Aktivierungsregion des e-Books oder einer linken UI-Aktivierungsregion des e-Books zu detektieren;
die rechte UI-Aktivierungsregion oder die linke UI-Aktivierungsregion auf der mindestens einen Seite des e-Books anzuzeigen;
eine Anzahl von umzublätternden Seiten an einer Position benachbart zu einem Ziehen auf der rechten UI-Aktivierungsregion oder der linken UI-Aktivierungsregion anzuzeigen, wobei die Anzahl der umzublätternden Seiten entsprechend dem Ausmaß des Ziehens der detektierten Berührung zunimmt bzw. abnimmt;
sich zu einer Seite des e-Books zu bewegen, die der Anzahl der Seiten entspricht, gemäß dem Loslassen des Ziehens und einer Berührung in einer linken Richtung oder einer rechten Richtung; und
die nächste Seite entsprechend der Anzahl zugenommener bzw. abgenommener Seiten anzuzeigen.

7. Vorrichtung nach Anspruch 6, wobei die Steuerung (100) ferner konfiguriert ist, um:
eine rechte Teilregion des Bildschirms als eine rechte UI-Aktivierungsregion zu bestimmen, und
eine linke Teilregion des Bildschirms als eine linke UI-Aktivierungsregion zu bestimmen.

8. Vorrichtung nach Anspruch 6, wobei die Steuerung (100) ferner konfiguriert ist, um:
die vorangehenden Seite der Seite, wenn die Berührungsbewegung in die rechte Richtung detektiert wird, während die Berührung in der linken UI-Aktivierungsregion eingegeben wurde, anzuzeigen, und
die nächste Seite der Seite, wenn die Berührungsbewegung in die linke Richtung detektiert wird, während die Berührung in der rechten UI-Aktivierungsregion eingegeben wurde, anzuzeigen.

9. Vorrichtung nach Anspruch 6, wobei die Steuerung (100) ferner konfiguriert ist, um:
zu bestimmen, ob ein Lesezeichen ein-Schalter auf einer oberen UI-Aktivierungsregion des e-Books berührt wird; und
wenn der Lesezeichen ein-Schalter auf der oberen UI-Aktivierungsregion des e-Books berührt wird, eine Lesezeichenfunktion zu aktivieren.

10. Vorrichtung nach Anspruch 9, wobei die Steuerung (100) ferner konfiguriert ist, um:
zu bestimmen, ob eine Lesezeichengenerierungsgeste eingegeben wird, wobei die Lesezeichengenerierungsgeste einen Kontakt umfasst, der in der oberen UI-Aktivierungsregion des e-Books beginnt, gefolgt von einem nach unten gerichteten Ziehen, während der Kontakt gehalten wird;
wenn die Lesezeichengenerierungsgeste eingegeben wurde, eine Klammer, entsprechend einem hinzuzufügenden Lesezeichen, zu generieren; zu bestimmen, ob die Berührung losgelassen wird, nachdem die Lesezeichengenerierungsgeste eingegeben wurde, und
wenn der Kontakt nach der Lesezeichengenerierungsgeste losgelassen wird, die generierte Klammer an einer Position, wo der Kontakt losgelassen wird, zu positionieren.

## Revendications

1. Procédé pour tourner les pages d'un livre numérique sur un terminal portable ayant une fonction de livre numérique, le procédé comprenant :
l'affichage (503) d'une page d'un livre numérique sur un écran du terminal portable ;
la détection d'un toucher sur une zone d'activation d'interface utilisateur (505), UI, droite du livre numérique ou une zone d'activation UI gauche (521) du livre numérique ;
l'affichage de la zone d'activation UI droite (507) ou de la zone d'activation UI gauche (523) sur au moins un côté du livre numérique ;
l'affichage d'un numéro de page à tourner à un emplacement adjacent à un glisser sur la zone d'activation UI droite (513) ou la zone d'activation UI gauche (529), dans lequel le numéro de la page à tourner augmente (515) ou diminue (531) respectivement, de manière correspondante à la quantité de glisser du toucher détecté ;
le passage à une page du livre numérique correspondant au numéro de la page en fonction du relâchement du glisser-déplacer vers la gauche (517) ou vers la droite (533) ; et
l'affichage (519) de la page suivante correspondant au numéro de pages augmentées (519) ou de pages diminuées (535), respectivement.

2. Procédé selon la revendication 1, comprenant en outre :
la détermination d'une zone partielle droite de l'écran en tant que zone d'activation UI droite ; et
la détermination d'une zone partielle gauche de l'écran en tant que zone d'activation UI gauche.

3. Procédé selon la revendication 2, dans lequel l'affichage de la page précédente de la page ou l'affichage de la page suivante de la page comprend :
l'affichage (527) de la page précédente de la page lorsque le mouvement de toucher est détecté vers la droite tandis que le toucher est entré dans la zone d'activation UI gauche ; et
l'affichage (511) de la page suivante de la page lorsque le mouvement de toucher est détecté vers la gauche tandis que le toucher est entré dans la zone d'activation UI droite.

4. Procédé selon la revendication 1, comprenant en outre :
la détermination (705) si un commutateur d'activation de signet est touché sur une zone d'activation UI supérieure du livre numérique ; et
lorsque le commutateur d'activation de signet est touché dans la zone d'activation UI supérieure du livre numérique, l'activation d'une fonction de signet.

5. Procédé selon la revendication 1, comprenant en outre :
la détermination si un geste de génération de signet est entré, la génération de signet comprenant un contact qui commence dans la zone d'activation UI supérieure du livre numérique, suivi d'un glisser vers le bas tout en maintenant le contact ;
lorsque la génération de signet est entrée, la génération (711) d'un trombone correspondant à un signet à ajouter ;
la détermination (713) si le contact est relâché après l'entrée de la génération de signet ; et
lorsque le contact est relâché après le geste de génération de signet, le positionnement (715) du trombone généré à un emplacement où le contact est relâché.

6. Appareil pour tourner les pages d'un livre numérique sur un terminal portable ayant une fonction de livre numérique, l'appareil comprenant :
un visualiseur de livre numérique (108) pour exécuter un livre numérique, commandant une unité d'affichage (106) pour afficher une page du livre numérique ; et
un contrôleur (100) conçu pour :
détecter un toucher sur une zone d'activation d'interface utilisateur, UI, droite du livre numérique ou une zone d'activation UI gauche du livre numérique ;
afficher la zone d'activation UI droite ou la zone d'activation UI gauche sur au moins un côté du livre numérique
afficher un numéro de page à tourner à un emplacement adjacent à un glisser sur la zone d'activation UI droite ou la zone d'activation UI gauche, dans lequel le numéro de la page à tourner augmente ou diminue, respectivement, de manière correspondante à la quantité de glisser du toucher détecté ;
passer à une page du livre numérique correspondant au numéro de la page en fonction du relâchement du glisser-déplacer vers la gauche ou vers la droite ; et
afficher la page suivante correspondant respectivement au numéro de pages augmentées ou diminuées.

7. Appareil selon la revendication 6, dans lequel le contrôleur (100) est en outre configuré pour :
déterminer une zone partielle droite de l'écran en tant que zone d'activation UI droite, et
déterminer une zone partielle gauche de l'écran en tant que zone d'activation UI gauche.

8. Appareil selon la revendication 6, dans lequel le contrôleur (100) est en outre configuré pour :
afficher la page précédente de la page lorsque le mouvement de toucher est détecté vers la droite tandis que le toucher est entré dans la zone d'activation UI gauche ; et
afficher la page suivante de la page lorsque le mouvement de toucher est détecté vers la gauche tandis que le toucher est entré dans la zone d'activation UI droite.

9. Appareil selon la revendication 6, dans lequel le contrôleur (100) est en outre configuré pour :
déterminer si un commutateur d'activation de signet est touché sur une zone d'activation UI supérieure du livre numérique, et
lorsque le commutateur d'activation de signet est touché sur la zone d'activation UI supérieure du livre numérique, activer une fonction de signet.

10. Appareil selon la revendication 9, dans lequel le contrôleur (100) est en outre configuré pour :
déterminer si un geste de génération de signet est entré, le geste de génération de signet comprenant un contact qui commence dans la zone d'activation UI supérieure du livre numérique, suivi d'un glisser vers le bas,
lorsque le geste de génération de signet est entré, générer un trombone correspondant à un signet à ajouter, déterminer si le toucher est relâché après l'entrée du geste de génération de signet, et
lorsque le contact est relâché après le geste de génération de signet, positionner le trombone généré à un emplacement où le contact est relâché.
